# EUROPEAN PATENT SPECIFICATION

(11) **EP 1 275 892 B1**
(45) Date of publication and mention of the grant of the patent: **30.08.2006**
(21) Application number: 02014510.8
(22) Date of filing: 01.07.2002
(51) Int. Cl.: F16L 39/00, F16L 39/02, F16L 11/02, E21F 1/06

(54) **A device for connecting two twin tubes**
Vorrichtung zum Verbinden von zwei Doppelrohren
Dispositif de raccordement pour deux bitubes

(30) Priority: 11.07.2001 SE 0102473
(43) Date of publication of application: 15.01.2003
(73) Proprietor: Nordström, Lars Ingvar, S-224 60 Lund (SE)
(72) Inventor: Nordström, Lars Ingvar, S-224 60 Lund (SE)
(74) Representative: Petri, Stellan

(56) References cited:
- BE-A- 382 205
- FR-A- 1 528 854
- US-A- 1 615 092
- US-A- 5 094 273

## Description

### Technical Field

The present invention relates to a device for connecting two twin tubes of a flexible material.

### Background of the Invention

A so called twin tube comprises two tubes and a common separation wall therebetween, all preferably made of elongated cloths of a heat-sealable material. The separation wall constitutes a common chord between the two tubes, which accordingly are not fully cylindrical.

A twin tube of this kind may for example be used for transporting air in a tunnel. In such a case the twin tube can be suspended from the tunnel ceiling or be positioned on a sidewall of the tunnel.

It is here of importance to keep the height or thickness of the tube at a minimum so as not to decrease the useful height of the tunnel more than necessary. For this reason use can be made of several parallel tubes with smaller diameters rather than one tube with a greater diameter for transporting the same air volume.

A twin tube saves height when used for transporting air but to a greater degree when it is not in use and accordingly hangs down from the tunnel ceiling.

Another utilization for a twin tube of the kind described is for damming water. When preferably filled with water (with the possible addition of compressed air), a twin tube has a much better ability to withstand the forces from water to be dammed than a single tube, which may easily roll or move on its substrate.

A twin tube of the kind described has a limited length, for example 50 m or possibly 100 m. When longer distances have to covered, two or more twin tubes have to be connected. Such connections have to be substantially fluid tight, comparatively cheap and reasonably easy to handle, both at connecting and disconnecting two twin tubes.

The best example of the prior art, as used for connecting two single tubes, is FR-A-1 528 854. Shown therein is a device for connecting two tubes, comprising
a metal bow to be arranged at the end of a first tube, and
a clamp strap, which has a shape corresponding to that of the metal bow and is to be arranged over the metal bow of the first tube and over the end of the second tube, which is to be pulled over the end of the first tube.

### The Invention

The device according to the invention for connecting two twin tubes is in relation hereto characterized by
a distance rod to be arranged at the end of a separation wall between the two tube parts, and
means associated with the distance rod for tightening the clamp strap to the metal bow, which metal bow has the shape of a "figure eight".

### Brief Description of the Drawings

The invention will be described in further detail below under reference to the accompanying drawings, in which
Fig 1 is a perspective, exploded view of a tube connection according to the invention,
Fig 2 is a transverse section through the tube connection as assembled,
Fig 3 is a perspective view of the assembled tube connection,
Fig 4 is a longitudinal section through the tube connection,
Fig 5 is a view to a larger scale and partly in section of a portion of the connection in the transverse direction of the tubes, and
Fig 6 is a view to a larger scale and partly in section of the same portion as in Fig 5 but in the longitudinal direction of the tubes.

### Detailed Description of a Preferred Invention

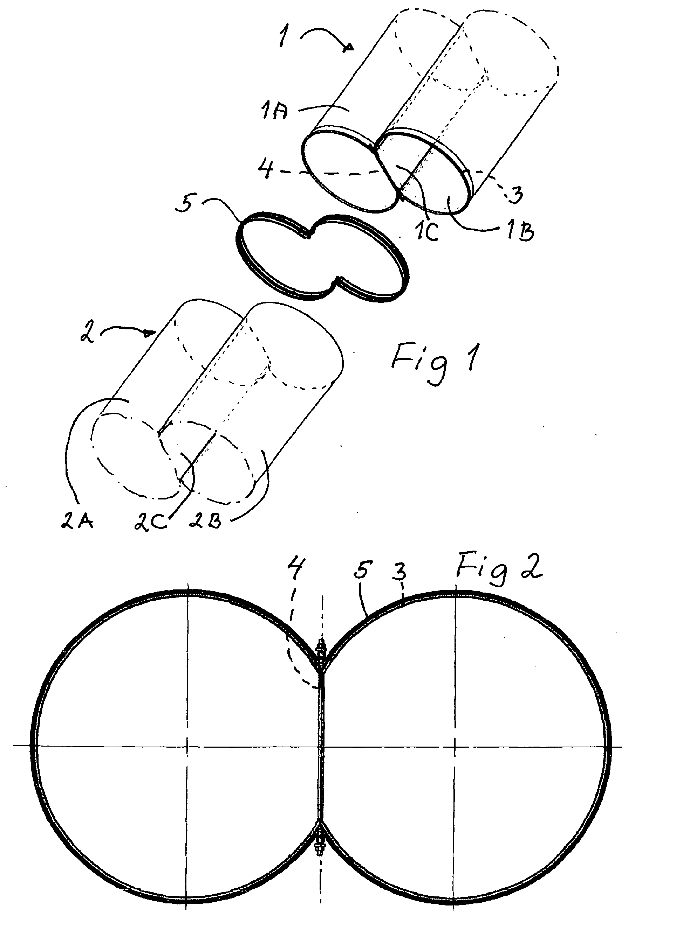

The purpose of the invention is to attain a tight connection between two twin tubes 1 and 2, as is schematically illustrated in an exploded view in Fig 1.

A twin tube may in this context be defined as two tubes longitudinally attached to each other in a permanent way. In the present case two tubes 1A and 1B or 2A and 2B, respectively, have a common separation wall 1C or 2C, respectively, said wall constituting a common chord for the two substantially cylindrical tubes. The twin tube is preferably made of a flexible, airtight, heat-sealable cloth material.

A first tube 1, which may also be called an inner tube, is - at its end to be connected to the second or outer tube 2 - provided in a heat-sealed end pocket with a bow 3, which is shaped as an open "figure eight" (like a clamp strap 5 to be described). This bow 3 is preferably made of metal, such as steel, and is therefore called a metal bow; it may, however, be made of another rigid material.

In a corresponding way, the separation wall 1C at the same end of the tube 1 is preferably provided in a heat-sealed end pocket with a distance rod 4, which extends through openings in the bow 3, as will be further described. The end pocket in the separation wall 1C for the distance rod 4 may alternatively be dispensed with. The two separation walls 1C and 2C may in any instance be connected by Velcro® fasteners.

When the second or outer tube 2 has been pulled over the end of the first or inner tube 1 equipped as described, a clamp strap 5, shaped as a "figure eight" and preferably being made of metal or a similar rigid material, is arranged over the metal bow 3 and tightened by means on the distance rod 4, said means to be described.

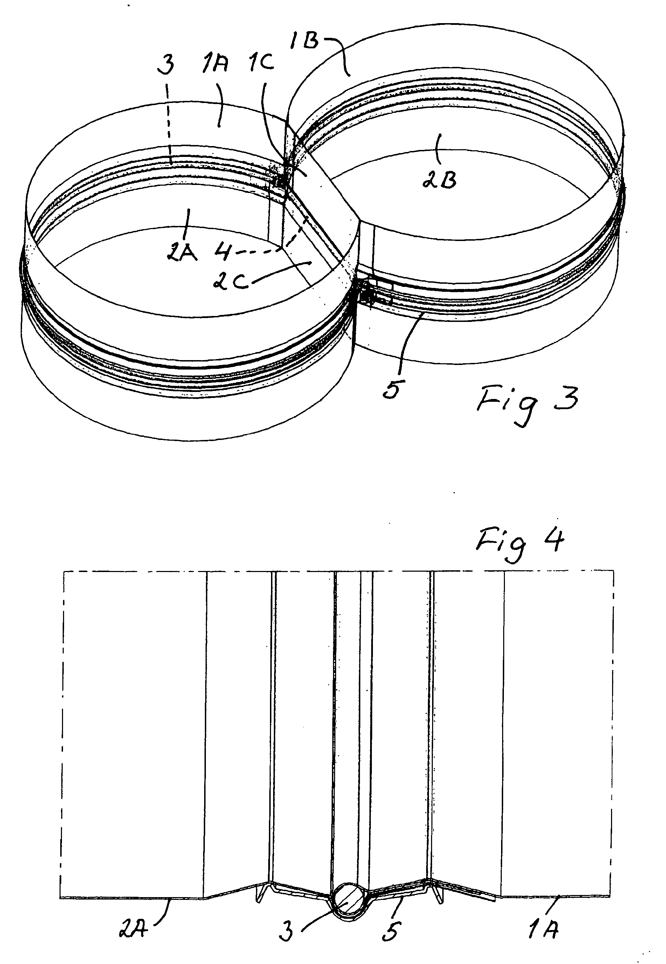

The thus completed connection is shown in a cross section in Fig 2, in perspective in Fig 3, and in longitudinal section in Fig 4.

Specifically, it is shown in Fig 4 that the metal bow 3 - arranged in a heat-sealed pocket at the end of the tube 1A - can preferably have a circular cross-sectional shape, whereas the clamp strap 5 has a central semi-circular groove corresponding to the metal bow 3. Towards its edges, the clamp strap 5 has flanges that are folded up for facilitating its threading-over the metal bow 3 with the two tube cloths.

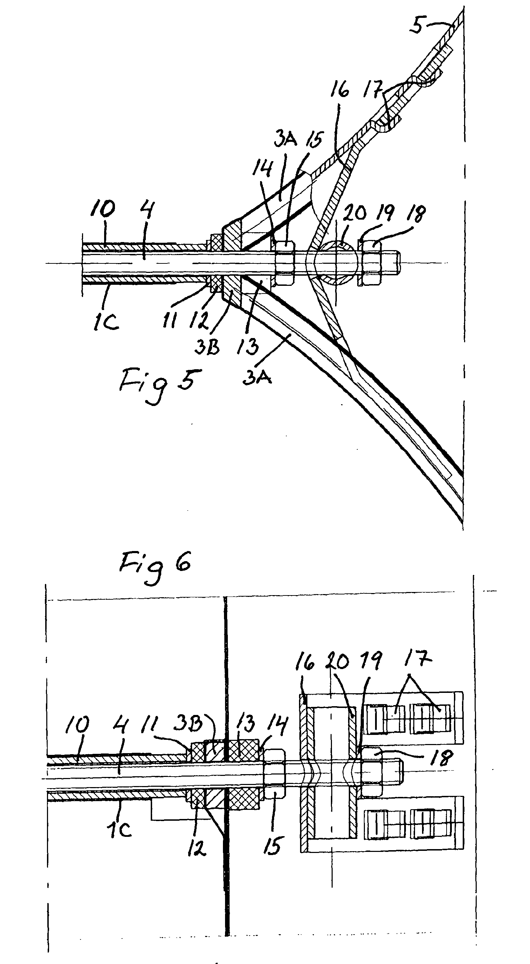

The specific design for attaching the metal bow 3 to each end of the distance rod 4 and then attaching and tightening the clamp strap 5 is shown in Figs 5 and 6, to which reference now is made.

The metal bow 3 consists of two bow portions 3A and two support plates 3B, to which the bow portions are permanently attached, preferably welded. The support plates 3B have central bores for free passage of the distance rod 4. A distance sleeve 10 is arranged around the distance rod 4 for determining the desired distance between the two bow halves, corresponding to the height of the separation wall.

The metal bow 3 - via the support plates 3B - is attached to or held against the distance sleeve 10 by means of a sealing, elastic arrangement comprising an inner washer 11, an inner bushing 12 of rubber or the like, an outer bushing 13 of rubber or the like, and an outer washer 14. The arrangement is tightened against the distance sleeve 10 by means of a nut 15 on the distance rod 4, which is threaded. There is a similar arrangement at the other end of the distance rod 4.

When the described arrangement with the metal bow 3 and the distance rod 4 has been mounted to the end of the first twin tube 1 and tightened as described above, the end of the second twin tube 2 is pulled over the end of the first twin tube 1. Hereafter the clamp strap 5 is placed over the tube ends and the metal bow 3 and is then tightened therearound by the following arrangement.

A bracket 16 has a central hole for the distance rod 4 and is preferably bent to the shape shown in Fig 5, especially so that its end portions applied against the clamp strap 5 have a shape conforming thereto. As shown in the upper part of Fig 5, the clamp strap 5 has hooks 17 for cooperation with corresponding holes in the end portions of the bracket 16. In this way the bracket 16 will be connected to the clamp strap 5 when transferred to the left in Fig 5.

The bracket 16 may be tightened - for tightening the clamp strap 5 around the metal bow 3 and the two twin tubes 1 and 2 - by means of a nut 18 acting on the bracket 16 over a washer 19 and a sleeve 20 provided with a transverse hole, as shown.

A similar arrangement is provided at the opposite end of the distance rod 4.

Modifications, especially with regard to the means for tightening the clamp strap 5 to the remainder of the arrangement, are possible within the scope of the appended claims.

## Claims

1. A device for connecting two twin tubes (1, 2) of a cloth material or similar flexible material, comprising
a metal bow (3) to be arranged at the end of a first tube (1), and
a clamp strap (5), which has a shape corresponding to that of the metal bow (3) and is to be arranged over the metal bow of the first tube (1) and over the end of the second tube (2) which is to be pulled over the end of the first tube,
**characterized by** a distance rod (4) to be arranged at the end of a separation wall (1C) between the two tube parts (1A, 1B); and
means (10,15,16,18) associated with the distance rod (4) for tightening the clamp strap (5) to the metal bow (3), which metal bow has the shape of a "figure eight".

2. A device according to claim 1, character-ized in that the metal bow (3) is to be arranged in a cloth pocket at the end of the first tube (1).

3. A device according to claim 1, character-ized in that the distance rod (4) is to be arranged in a cloth pocket at the end of the separation wall (1C).

4. A device according to claim 1, character-ized in that the distance rod (4) extends through a distance sleeve (10) and holes in the metal bow (3), the metal bow being fastened thereto by means of nuts (15) engaging threads at each end of the distance rod (4).

5. A device according to claim 1, character-ized by elastic bushings (12, 13) at either side of the metal bow (3) for obtaining a resilient fastening.

6. A device according to claim 5, character-ized in that washers (11, 14) are arranged between on one hand the distance sleeve (10) and the nut (15) and on the other hand the elastic bushings (12, 13).

7. A device according to claim 4, character-ized in that the clamp strap (5) is connected to each end of the distance rod (4) by means of a bracket (16), which is connectable to the clamp strap (5).

8. A device according to claim 7, character-ized in that the clamp strap (5) is provided with hooks (17) and the bracket (16) with corresponding holes for connecting the bracket to the clamp strap.

9. A device according to claim 7, character-ized in that the distance rod (4) extends through a central hole in each bracket (16) and that the bracket is tightened to the distance rod by means of a nut (18).

10. A device according to claim 9, character-ized in that a washer (19) and a sleeve (20) are arranged between the bracket (16) and the nut (18).

## Patentansprüche

1. Vorrichtung zum Verbinden von zwei Doppelrohren (1, 2) aus einem Gewebematerial oder ähnlich flexiblem Material, umfassend
einen Metallbogen (3), der am Ende eines ersten Rohres anzuordnen ist, und
ein Spannband (5), das eine Form hat, die der des Metallbogens (3) entspricht, und über dem Metallbogen des ersten Rohres (1) und über dem Ende des zweiten Rohres (2) anzuordnen ist, welches über das Ende des ersten Rohres zu ziehen ist, **gekennzeichnet durch**
einen Distanzstab (4), der am Ende einer Trennwand (1C) zwischen den beiden Rohrteilen (1A, 1B) anzuordnen ist; und
eine Vorrichtung (10, 15, 16, 18), die mit dem Distanzstab (4) verbunden ist, zum Spannen des Spannbandes (5) an den Metallbogen (3), der die Form einer Acht hat.

2. Vorrichtung gemäß Anspruch 1, **dadurch gekennzeichnet, daß** der Metallbogen (3) in einer Gewebetasche am Ende des ersten Rohres (1) anzuordnen ist.

3. Vorrichtung gemäß Anspruch 1, **dadurch gekennzeichnet, daß** der Distanzstab (4) in einer Gewebetasche am Ende der Trennwand (1C) anzuordnen ist.

4. Vorrichtung gemäß Anspruch 1, **dadurch gekennzeichnet, daß** sich der Distanzstab (4) durch eine Distanzhülle (10) erstreckt und durch Löcher im Metallbogen (3), wobei der Metallbogen mittels Muttern (15) daran befestigt wird, die mit Fäden an jedem Ende des Distanzstabes (4) zusammenwirken.

5. Vorrichtung gemäß Anspruch 1, **gekennzeichnet durch** elastische Buchsen (12, 13) an jeder Seite des Metallbogens (3) zum Erlangen einer federnden Befestigung.

6. Vorrichtung gemäß Anspruch 5, **dadurch gekennzeichnet, daß** Unterlegscheiben (11, 14) zwischen einerseits der Distanzhülle (10) und der Mutter (15) und andererseits den elastischen Buchsen (12, 13) anzuordnen sind.

7. Vorrichtung gemäß Anspruch 4, **dadurch gekennzeichnet, daß** das Spannband (5) mit beiden Enden des Distanzstabes (4) mittels einer Halterung (16) verbunden ist, die mit dem Spannband (5) verbunden werden kann.

8. Vorrichtung gemäß Anspruch 7, **dadurch gekennzeichnet, daß** das Spannband (5) mit Haken (17) und die Halterung (16) mit entsprechenden Löchern zum Verbinden der Halterung mit dem Spannband versehen ist.

9. Vorrichtung gemäß Anspruch 7, **dadurch gekennzeichnet, daß** sich der Distanzstab (4) durch ein zentrales Loch in jeder Halterung (16) erstreckt und die Halterung mittels einer Mutter (18) zum Distanzstab (4) gespannt ist.

10. Vorrichtung gemäß Anspruch 9, **dadurch gekennzeichnet, daß** sich eine Unterlegscheibe (19) und eine Hülse (20) zwischen der Halterung (16) und der Mutter (18) befinden.

## Revendications

1. Dispositif destiné à raccorder deux tubes jumelés (1, 2) constitués d'un matériau de tissu ou d'un matériau souple similaire, comprenant
un anneau métallique (3) devant être disposé à l'extrémité d'un premier tube (1), et
un étrier de serrage (5) qui présente une forme correspondant à celle de l'anneau métallique (3) et qui doit être disposé sur l'anneau métallique du premier tube (1) et sur l'extrémité du second tube (2) qui doit être fixé sur l'extrémité du premier tube,
**caractérisé par** une tige d'écartement (4) devant être disposée à l'extrémité d'une paroi de séparation (1C) entre les deux parties de tube (1A, 1B) ; et
un moyen (10, 15, 16, 18) associé à la tige d'écartement (4) en vue de serrer l'étrier de serrage (5) sur l'anneau métallique (3), lequel anneau métallique présente la forme d'un "huit".

2. Dispositif selon la revendication 1, **caractérisé en ce que** l'anneau métallique (3) doit être disposé dans une poche en tissu à l'extrémité du premier tube (1).

3. Dispositif selon la revendication 1, **caractérisé en ce que** la tige d'écartement (4) doit être disposée dans une poche en tissu à l'extrémité de la paroi de séparation (1C).

4. Dispositif selon la revendication 1, **caractérisé en ce que** la tige d'écartement (4) traverse un manchon d'écartement (10) et des trous dans l'anneau métallique (3), l'anneau métallique étant fixé à celui-ci au moyen d'écrous (15) s'engageant par vissage à chaque extrémité de la tige d'écartement (4).

5. Dispositif selon la revendication 1, **caractérisé par** des bagues élastiques (12, 13) de chaque côté de l'anneau métallique (3) en vue d'obtenir une fixation élastique.

6. Dispositif selon la revendication 5, **caractérisé en ce que** des rondelles (11, 14) sont disposées d'une part entre le manchon d'écartement (10) et l'écrou (15), et d'autre part entre les bagues élastiques (12, 13).

7. Dispositif selon la revendication 4, **caractérisé en ce que** l'étrier de serrage (5) est relié à chaque extrémité de la tige d'écartement (4) au moyen d'une patte (16), qui peut être reliée à l'étrier de serrage (5).

8. Dispositif selon la revendication 7, **caractérisé en ce que** l'étrier de serrage (5) est doté de crochets (17) et de la patte (16), comportant des trous correspondants pour relier la patte à l'étrier de serrage.

9. Dispositif selon la revendication 7, **caractérisé en ce que** la tige d'écartement (4) traverse un trou central dans chaque patte (16), et la patte est serrée sur la tige d'écartement au moyen d'un écrou (18).

10. Dispositif selon la revendication 9, **caractérisé en ce qu'**une rondelle (19) et un manchon (20) sont disposés entre la patte (16) et l'écrou (18).
